## Europäisches Patentamt

## European Patent Office

## Office européen des brevets

(19)

(11) Publication number: **0 221 871**
**B1**

(12)

# EUROPEAN PATENT SPECIFICATION

(45) Date of publication of the patent specification:
**05.04.89**

(51) Int. Cl.⁴: **A47J 47/00**

(21) Application number: **86850370.7**

(22) Date of filing: **23.10.86**

(54) **An arrangement in cutting boards.**

(30) Priority: **04.11.85 SE 8505183**

(43) Date of publication of application:
**13.05.87 Bulletin 87/20**

(45) Publication of the grant of the patent:
**05.04.89 Bulletin 89/14**

(84) Designated Contracting States:
**AT BE CH DE ES FR GB IT LI NL SE**

(56) References cited:
**BE-A- 484 269**
**BE-A- 685 115**
**FR-A- 758 029**
**GB-A- 1 293 073**
**US-A- 1 713 072**
**US-A- 1 745 099**
**US-A- 2 167 195**
**US-A- 4 017 063**
**US-A- 4 517 232**

(73) Proprietor: **CLL-Plast AB, P.O. Box 222,
S-335 00 Gnosjö(SE)**

(72) Inventor: **Lilja, Curt Lennart, Barrgatan 19,
S-335 00 Gnosjö(SE)**

(74) Representative: **Omming, Allan, A. OMMING & CO. AB
Sveavägen 28-30, S-111 34 Stockholm(SE)**

## Description

The invention relates to a cutting board the opposite sides of which being parallel and straight.

In order to fulfil all normal purposes for which such boards are intended, it is necessary to have in possession cutting boards and like supports of varying sizes and proportions, which may be difficult to achieve.

In most cases it is further of interest to provide the cutting board with a support for cutting bread which forms a unit with the cutting board and serves as a guide for a knife.

It is, therefore, a main object of the invention to provide a cutting board, which can be attached to identical cutting boards to achieve the desired size and to which a support for a knife can be steadily attached to a cutting board.

BE-A 484 269 discloses a base structure provided with four grooves for inserting pins acting as guides for a knife. The base is to be affixed to a table. The device known does not disclose any means for affixing it to a second cutting board.

A cutting board provided with a guide for a knife is known from GB-A 1 293 073. The guide is slidably arranged in a slot of the board and does not provide a stable means for supporting a knife and there is no possibility to securely attach the board to a second board.

The object of the invention is to provide a cutting board which can be steadily connected to other cutting boards to create a composite board having the desired size and a support to be applied in a fixed position to one of the boards.

This object is realized in accordance with the invention by a cutting board of the type mentioned which is characterized in that one side edge is provided with at least one vertical, through-passing recess and the other, opposite side edge with at least one corresponding projection; and in that the recess and the projection are shaped so that the projection fits into the recess to allow two or more cutting boards to be assembled to a unit; and a support for cutting bread having a .base (6) provided with a recess or a projection identical to the said recess or projection of the cutting board such that the said support can be connected to a first cutting board in exactly the same way as a second cutting board.

The invention will now be described in more detail with reference to the accompanying drawing, in which

Figure 1 is a perspective view of one exemplifying embodiment of a cutting board arrangement according to the invention;

Figure 2 illustrates two cutting board arrangements according to Figure 1 connected together; and

Figure 3 illustrates an ancillary device for facilitating the cutting of bread, this ancillary device having a base part intended for co-action with a recess provided in the arrangement according to Figure 1 or 2.

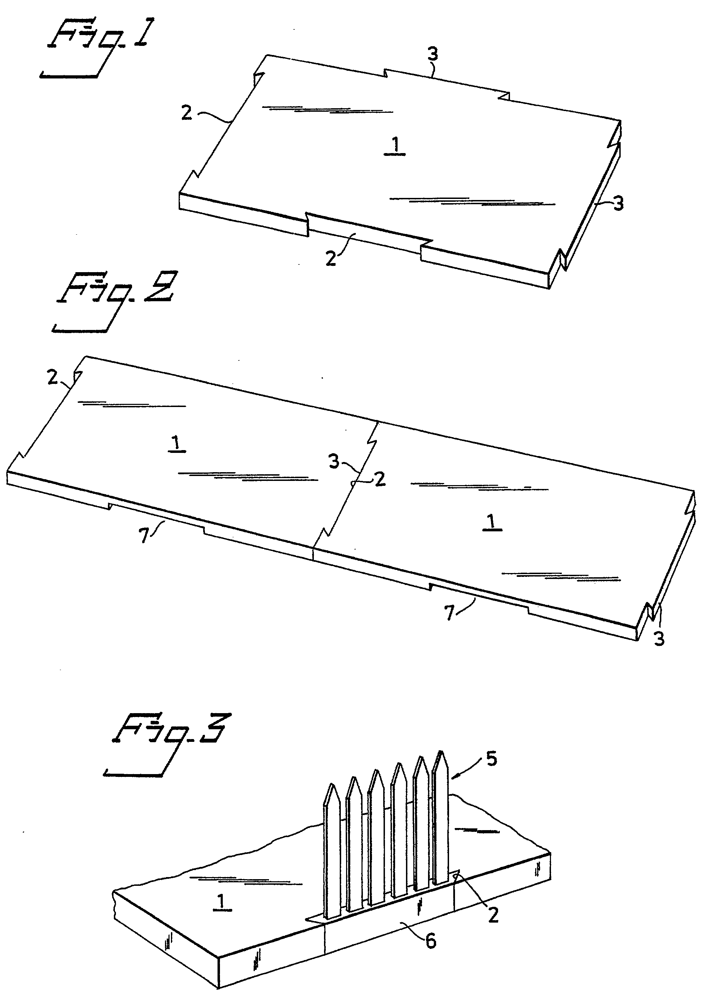

Figure 1 illustrates an oblong rectangular cutting board 1 having two pairs of mutually opposing, substantially straight side edges in which uniform recesses 2 and projections 3 are provided. This enables two or more such cutting boards to be connected together, edge to edge, in the manner illustrated in Figure 2, wherewith either two short sides or two long sides of the board can be connected together, as required.

A further advantage afforded by the recesses 2 and the projections 3 is that ancillary devices 5 intended for different purposes, such as the cutting of bread, can be provided with a base part 6 so constructed as to enable the base part to be connected to a projection 3 or, as is preferred, to a recess 2, in the manner illustrated in Figure 3.

It will be understood that the invention is not restricted to the illustrated embodiments, but that modifications can be made within the scope of the invention defined in the following claims. Thus, the recesses and projections may have a form different to that illustrated and may optionally be divided into two sections. In addition, a handle 7 may be provided at the centre portions of two mutually opposing side edges, the recesses and projections suitably being distributed and located on both sides of the handle and similarly on the remaining two side edges.

## Claims

A cutting board (1) the opposite side-edges of which being parallel and substantially straight, characterized in that one wide edge is provided with at least one vertical, through-passing recess (2) and the other, opposite side edge with at least one corresponding projection (3); and in that the recess and the projection are shaped so that the projection fits into the recess to allow two or more cutting boards to be connected together and a support for cutting bread having a base (6) provided with a recess (2) or a projection (3) identical to the recess or projection of the cutting board such that the said support can be connected to a first cutting board in exactly the same way as a second cutting board.

## Patentansprüche

Schneidbrett (1), dessen gegenüberliegende Seiten parallel und im wesentlichen gerade sind, dadurch gekennzeichnet, daß ein Seitenrand mit wenigstens einer vertikalen durchgehenden Ausnehmung (2) versehen ist und der andere, gegenüberliegende Seitenrand wenigstens einen entsprechenden Vorsprung (3) trägt, und daß die Ausnehmung und der Vorsprung so gestaltet sind, daß der Vorsprung in die Ausnehmung derart einpaßt, daß zwei oder mehrere Schneidbretter miteinander verbunden werden können, wobei außerdem eine Führung zum Schneiden von Brot vorgesehen ist, die eine Basis (6) besitzt, welche eine Ausnehmung (2) oder einen Vorsprung (3) identisch zu den Ausnehmungen bzw. Vorsprüngen des Schneidbrettes derart aufweist, daß die Führung an einem ersten Schneidbrett in genau der gleichen Weise wie ein zweites Schneidbrett festgelegt werden kann.

## Revendications

Planche à découper (1) dont les bords latéraux opposés sont parallèles et sensiblement rectilignes, caractérisée par le fait qu'un bord latéral est équipé d'au moins un évidement vertical, traversent (2) et que l'autre bord latéral opposé est équipé d'au moins une partie en saillie correspondante (3); et par le fait que l'évidement et la partie en saillie ont des formes telles que la partie en saillie s'adapte à l'intérieur de l'évidement pour permettre de relier entre elles deux ou plusieurs planches à découper; et un support pour découper du pain ayant un socle (6) équipé d'un évidement (2) ou d'une partie en saillie (3) identique à l'évidement ou à la partie en saillie de la planche à découper de manière que ledit support puisse être connecté à une première planche à découper exactement de la même manière qu'une seconde planche à découper.

Fig.1

Fig.2

Fig.3